# NEUE EUROPÄISCHE PATENTSCHRIFT

(11) **EP 0 478 886 B2**
(45) Veröffentlichungstag und Bekanntmachung des Hinweises auf die Entscheidung über den Einspruch: **13.01.1999**
(45) Hinweis auf die Patenterteilung: 03.07.1996
(21) Anmeldenummer: 91106942.5
(22) Anmeldetag: 29.04.1991
(51) Int. Cl.: B60R 22/22, F16G 11/02

(54) **Zugglied**
Tension element
Elément de tension

(30) Priorität: 04.10.1990 DE 9013782 U
(43) Veröffentlichungstag der Anmeldung: 08.04.1992
(73) Patentinhaber: Griesemer, Albert, D-56457 Westerburg (DE)
(72) Erfinder: Griesemer, Albert, W-5438 Westerburg-Gershasen (DE); Kreim, Else, W-6087 Büttelborn (DE); Specht, Martin, Dipl.-Ing., W-8133 Feldafing (DE)
(74) Vertreter: Grommes, Karl F., Dr.

(56) Entgegenhaltungen:
- DE-A- 1 816 307
- DE-A- 1 937 788
- DE-A- 4 007 969
- GB-A- 551 770
- GB-A- 877 899
- JP-A-55 057 742
- US-A- 1 217 107
- US-A- 1 654 340
- US-A- 2 835 012
- US-A- 3 466 712
- US-A- 4 915 451

## Beschreibung

### Technisches Gebiet

Die Erfindung betrifft ein Zugglied zur Anwendung im Automobilbau, nämlich in Verbindung mit der Halterung von Gurtschlössern, bestehend aus zwei parallelen Drahtseilabschnitten, insbesondere eines zu einer Schlaufe umgebogenen Drahtseiles, und einem daran angepreßten Mitnehmerteil gemäß dem Oberbegriff der Ansprüche 1 und 2.

### Stand der Technik

Es ist im Automobilbau im Zusammenhang mit der Halterung von Gurtschlössern bekannt, als Mitnehmer- oder Anschlußteile für Drahtseilschlaufen Kaltfließpreßteile einzusetzen. Letztere besitzen eine geschlossene Hülse von meist ovalem Querschnitt zur Aufnahme der Drahtseilabschnitte oder -enden. Die Hülse laßt sich insgesamt so verformen (verpressen), daß sich daraus die Drahtseilabschnitte bis zu verhältnismäßig hohen Grenzwerten nicht mehr ausziehen lassen.

Diese bekannte Ausführungsform eines Zuggliedes besitzt aber auch Nachteile. So sind Fließpreßteile im allgemeinen recht teuer in der Herstellung. Außerdem sind sie mit beträchtlichen Mindestabmessungen behaftet, was ihren Einsatz bei einer gewünschten raumsparenden Bauweise bisweilen problematisch macht.

Ein weiterer Stand der Technik ist durch die DE 40 07 969 A 1 bekannt. Danach liegen bei einer Gurtschloß-Befestigungsvorrichtung die Endstücke eines Seils an einer sogenannten Bodenwand an und sind dagegen mittels umgebogener lappenförmiger Vorsprünge festgeklemmt. Bodenwand und Vorsprünge sind integraler Bestandteil einer Montageplatte und können insgesamt aus Bandstahl ausgestanzt und geformt werden.

Hohe Ausziehwiderstände sind mit jener Ausführungsform nicht erzielbar. Eine Festigkeitssteigerung ist nur in der Weise erreichbar, daß die lappenförmigen Vorsprünge stärker angepreßt werden. Da andererseits damit die Gefahr einer unzulässigen Einschnürung und Beschädigung der Drahtseilenden wächst, sind einer Festigkeitssteigerung auf diesem Wege deutliche Grenzen gesetzt.

### Darstellung der Erfindung

Hier setzt die Erfindung an. Sie will ein Zugglied der genannten Art vorschlagen, bei dem das Mitnehmer- oder Anschlußteil preiswerter herzustellen ist. Das Mitnehmerteil soll einen hohen Ausziehwiderstand aufweisen und im übrigen eine raumsparende Bauweise zulassen.

Gelöst wird diese Aufgabe erfindungsgemäß dadurch, daß das Mitnehmerteil ein ursprünglich flaches und anschließend mindestens teilweise hülsenförmig umgebogenes Blechteil ist, wobei der hülsenförmige Abschnitt des Mitnehmerteils quer zur Zugrichtung verlaufende Einkerbungen aufweist, derart daß auf einer Seite des hülsenförmigen Abschnittes des Mitnehmerteils mindestens eine Einkerbung und auf der gegenüberliegenden Seite vor und hinter der Einwirkstelle der erstgenannten Einkerbung jeweils eine weitere Einkerbung vorgesehen sind.

Wie ersichtlich, greift die Erfindung auf ein sehr einfaches Ausgangsmaterial sowie eine sehr einfache Ausgangsform zurück. Man könnte dabei auch an einen Kabelschuh denken, wie er auf dem Gebiet der Elektroinstallation verwendet wird. Allerdings sind die bekannten Kabelschuhe weder dazu bestimmt noch geeignet, Zugverbindungen zu ermöglichen, vielmehr gewährleisten sie ledigich Kontakte für eine Stromleitung. Erst wenn nach dem Vorschlag der Erfindung der hülsenförmige Abschnitt des Mitnehmerteils noch mit Einkerbungen quer zur Zugrichtung versehen wird, erhöht sich der Ausziehwiderstand erheblich und lassen sich dadurch entsprechende Zugkräfte übertragen. Diese einfache Maßnahme erweist sich damit als überraschend wirksam.

Wie gesagt, kommt als Ausgangsmaterial einfaches Blech (Tafelblech) in Betracht. Daraus lassen sich flache Blechteile ausstanzen, welche anschließend teilweise noch verformt werden müssen. Dabei wird durch Umbiegen um die Längsachse eine Art offene Hülse gebildet, in die zwei benachbarte Drahtseilabschnitte (meist die Enden einer Drahtseilschlaufe) eingesetzt werden können. Danach wird die Hülse zusammengedrückt und bis auf eine Berührungsnaht geschlossen. Letztere kann sozusagen unbehandelt bleiben, braucht also insbesondere nicht verschweißt oder anderweitig gesichert zu werden. Ein Verschweißen erscheint nicht nur entbehrlich, sondern sogar wenig ratsam, da es unter Umständen die Festigkeit des Drahtseils mindert und in jedem Falle die Herstellung verteuert.

Der solchermaßen verformte (verpreßte) hülsenförmige Abschnitt des Mitnehmerteils weist in etwa einen ovalen Querschnitt auf, bedingt durch die beiden nebeneinanderliegenden Drahtseilabschnitte. Schließlich erhält der vorgenannte Abschnitt noch Einkerbungen quer zur Zugrichtung. Die Zugrichtung fällt dabei mit der Längsachse des Mitnehmerteiis zusammen. Einkerbungen bedeutet hier soviel wie von außen verursachte partielle Verformung, welche sich bis auf die Oberfläche der Drahtseilabschnitte hin fortsetzt. Der Begriff der Einkerbung soll also nicht so verstanden werden, als handle es sich um eine schlagartige Verformungsarbeit. In Betracht kommt vielmehr ein regelrechter Prägevorgang. Man könnte deshalb auch von Sicken sprechen. Die in solcher Weise hergestellten Einkerbungen erschweren das Ausziehen der Drahtseilabschnitte ganz beträchtlich.

So lassen sich Zugglieder gewinnen, mit denen Zugkräfte von 20 kN und mehr übertragen werden können, wie es sonst nur den eingangs besprochenen Kaltfließpreßteiien vorbehalten war. Anders als dort, wo es wesentlich auf eine flächige Umschließung der Drahtseilabschnitte und damit eine starke Verpressung der Hülse insgesamt ankommt, haben jetzt vor allem einige partielle Verformungen, und zwar wechselseitig zu erfolgen.

Der Erfindung liegt die Erkenntnis zugrunde, daß ein hoher Ausziehwiderstand insbesondere durch eine Kraftumlenkung zu erzielen ist. Das System von einer Einkerbung auf der einen Seite sowie weiterer Einkerbungen davor und dahinter auf der gegenüberliegenden Seite läßt sich dabei nicht nur einmal, sondern bei Bedarf auch mehrfach anwenden. Dies erhöht dann weiter die Wirksamkeit.

Eine alternative Lösung stellt das Zusammenwirken von Einkerbung einerseits und Ausnehmung andererseits gemäß Anspruch 2 dar. Sie ist dadurch gekennzeichnet, daß an der Innenseite des hülsenförmigen Abschnitts gegenüber den Einkerbungen Ausnehmungen zum teilweisen Eindringen der Drahtseilabschnitte vorgesehen sind.

Zusammenfassend läßt sich somit sagen, daß die erfindungsgemäßen Zugglieder besonders einfach und preiswert herzustellen sind und sich darüber hinaus auch raumsparend dimensionieren lassen. Für die Wahl der Blechstärke als solche spielen grundsätzlich die vorgesehenen Belastungen wie auch die Stärke der Drahtseilabschnitte eine Rolle. Je höher diese ausfallen, desto höher sollte die Blechstärke gewählt werden.

Als vorteilhaft erweist sich, wenn die Einkerbungen gemäß einem weiteren Vorschlag der Erfindung senkrecht auf die parallelen Drahtseilabschnitte gerichtet sind.

Vorteilhaft ist eine Einkerbtiefe von mindestens 20 % der jeweils gewählten Blechstärke vorgesehen.

Zweckmäßigerweise erstrecken sich die Einkerbungen seitlich jeweils bis maximal zur Mittellinie der beaufschlagten Drahtseilabschnitte. Dadurch lassen sich mit jeder Einkerbung seitenweise optimale Wirkungen erzielen.

Vorteilhaft weisen die Einkerbungen einen im wesentlichen rechteckigen Querschnitt mit leichter Rundung am Grund auf. Je nach Material und Stärke des Mitnehmerteils sowie der Stärke der Drahtseilabschnitte und der Größe der zu übertragenden Zugkräfte können aber auch anders geformte Einkerbungen vorgesehen werden, beispielsweise mit keilförmigem oder rundem Querschitt. Eine stärkere Verformungsarbeit erfordern Einkerbungen mit trapezförmigem oder rechteckigem Querschnitt; dafür erreichen sie auch eine höhere Wirksamkeit.

Die Ausnehmungen können beispielsweise die Form von Rillen haben. Diese wiederum können an der Innenseite des hülsenförmigen Abschnitts durch einen Materialabtrag (wie Ausfräsen) oder besondere Verformungsarbeit (wie Prägen, Pressen und insbesondere Sicken) eingeformt sein. Letzteres kann gleichzeitig mit dem Anbringen der Einkerbungen erfolgen und bedeutet dann weder einen zusätzlichen Arbeitsgang noch eine Materialschwächung.

Die Ausnehmungen können aber auch die Form von Löchern haben, welche einfach auszustanzen sind.

### Kurze Beschreibung der Zeichnung

Weitere Einzelheiten und Vorteile werden nachfolgend anhand der Zeichnung für bevorzugte Ausführungsbeispiele beschrieben. Darin zeigen:
- Fig. 1: ein erfindungsgemäßes Zugglied in Draufsicht,
- Fig. 2: den Gegenstand von Fig. 1 in Seitenansicht,
- Fig. 3: den Gegenstand von Fig. 1 in Unteransicht,
- Fig. 4: den Gegenstand von Fig. 1 im Schnitt entlang der Linie IV - IV nach Fig. 2,
- Fig. 5: eine andere Ausführungsform eines erfindungsgemäßen Zuggliedes in Draufsicht,
- Fig. 6: den Gegenstand von Fig. 5 in Seitenansicht,
- Fig. 7: eine weitere Ausführungsform eines erfindungsgemäßen Zuggliedes in Seitenansicht,
- Fig. 8: den Gegenstand von Fig. 7 in Draufsicht,
- Fig. 9: den Gegenstand von Fig. 7 im Schnitt entlang der Linie IX - IX nach Fig. 8,
- Fig. 10: noch eine andere Ausführungsform eines erfindungsgemäßen Zuggliedes in Seitenansicht,
- Fig. 11: den Gegenstand von Fig. 10 in Draufsicht,
- Fig. 12: den Gegenstand von Fig. 10 im Schnitt entlang der Linie XII - XII nach Fig. 11,
- Fig. 13: noch eine weitere Ausführungsform eines erfindungsgemäßen Zuggliedes in Seitenansicht,
- Fig. 14: den Gegenstand von Fig. 13 in Draufsicht und
- Fig. 15: den Gegenstand von Fig. 13 im Schnitt entlang der Linie XV - XV nach Fig. 14.

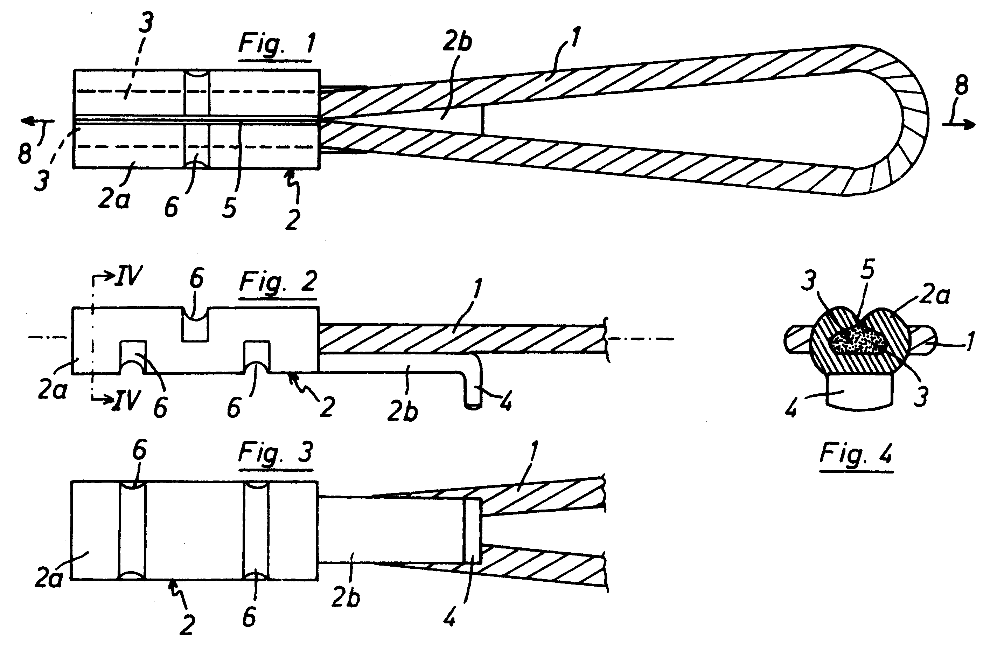

Nach Fig. 1 ist ein Drahtseil 1 zu einer Schlaufe umgebogen. Die Schlaufe wird dabei von einem Anschluß- oder Mitnehmerteil 2 geschlossen gehalten, welches fit einem hülsenförmigen Abschnitt 2a an die parallel nebeneinanderliegenden Drahtseilenden oder -abschnitte 3 angepreßt ist. Das Mitnehmerteil 2 ist ein Blechteil, welches durch Stanzen gewonnen wurde und ursprünglich flach war. Anschließend wurde es teilweise verformt (umgebogen). Es verfügt außer dem bereits erwähnten hülsenförmigen Abschnitt 2a zur Aufnahme der Drahtseilenden 3 noch über einen weiteren Abschnitt 2b, welcher für einen form- und kraftschlüssigen Anschluß an ein fremdes Bauelement vorgesehen ist. Jener weitere Abschnitt 2b weist hier an seinem Ende eine Aufkantung 4 auf und ist im übrigen flach (vgl. Fig. 2 ff).

Der Abschnitt 2a ist mit seinen ursprünglich flachen Seitenteilen nach oben zu einer Hülse umgebogen. Dabei sind die Seitenteile mit ihrer Außenkante zu einer Berührungsnaht 5 zusammengepreßt. Die Berührungsnaht 5 ist ansonsten offen (vgl. auch Fig. 4). Unter dem Anpreßdruck des Abschnittes 2a haben sich die Konturen der Drahtseilabschnitte 3 zu ihrem äußersten Ende hin aufgelöst (sie sind sozusagen ineinander übergegangen), wodurch sich auch der Ausziehwiderstand aus dem Mitnehmerteil 2 erhöht hat. Einen wesentlichen Anteil am Ausziehwiderstand haben im übrigen quer zur Zugrichtung verlaufende Einkerbungen 6:

Die Zugrichtung fällt hier mit der Längsachse zusammen und soll mit den beiden Pfeilen 8 verdeutlicht werden. Schließlich ist das gezeigte Zugglied dazu bestimmt, einerseits mit der aus dem Drahtseil 1 gebildeten Schlaufe und andererseits mit dem Mitnehmerteil 2 an fremde Bau- oder Kraftelemente angeschlossen zu werden und dazwischen Zugkräfte zu übertragen. Der Anschluß des Mitnehmerteils 2 kann, wie bereits gesagt, form- und kraftschlüsig erfolgen. Für die Schlaufe kommt eher ein loses Einhängen in einen Haken, ein Umlegen um eine Rolle, einen Bolzen, Zapfen o. ä. in Betracht.

Die Einkerbungen 6 sind nach den Fig. 1 bis 3 senkrecht auf die parallelen Drahtseilabschnitte 3 gerichtet. Sie weisen hier einen halbrunden Querschnitt auf und besitzen an der tiefsten Stelle eine Einkerbtiefe von etwa 50 % der Blechstärke des Mitnehmerteils 2. Insbesondere aus Fig. 2 wird deutlich, daß die Einkerbungen 6 versetzt zueinander angeordnet sind, nämlich derart, daß auf einer Seite (= oben) eine Einkerbung 6 vorgesehen ist und auf der gegenüberliegenden Seite (= unten) jeweils eine Einkerbung 6 vor und hinter der Einwirkstelle der erstgenannten Einkerbung 6 besteht. Dies führt zu einer Kraftumlenkung, welche den Ausziehwiderstand bei einer nur mäßigen Verformung beträchtlich erhöht. Die Einkerbungen 6 erstrecken sich im gezeigten Ausführungsbeispiel jeweils bis zur Mittellinie (Seele) der beaufschlagten Drahtseilabschnitte 3 (vgl. Fig. 2).

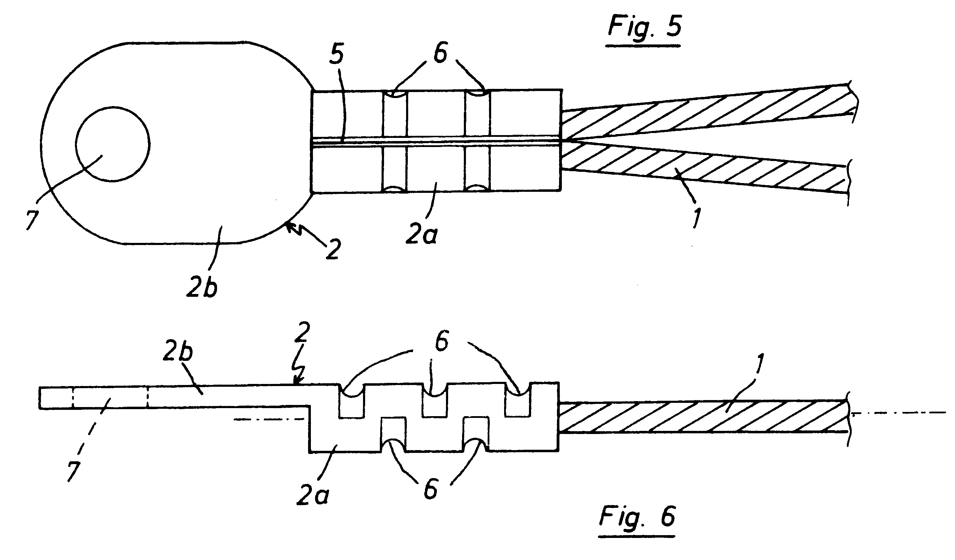

Wie im übrigen die Fig. 5 und 6 verdeutlichen, läßt sich der Erfindungsgedanke in vielfältiger Form realisieren. So kann das Mitnehmerteil 2 sowohl über einen anders geformten Abschnitt 2a als auch 2b verfügen. Letztgenannter Abschnitt ist hier insgesamt flach gebildet und für den sicheren Anschluß an ein fremdes Kraftelement mit einer Bohrung 7 versehen. Der hülsenförmige Abschnitt 2a ist zunächst ähnlich ausgebildet wie zuvor beschrieben, jedoch mit dem Unterschied, daß auf einer Seite zwei Einkerbungen 6 und auf der anderen Seite versetzt dazu drei weitere Einkerbungen 6 vorgesehen sind. Die Folge davon ist eine wiederholte Kraftumlenkung im Interesse eines besonders hohen Ausziehwiderstandes.

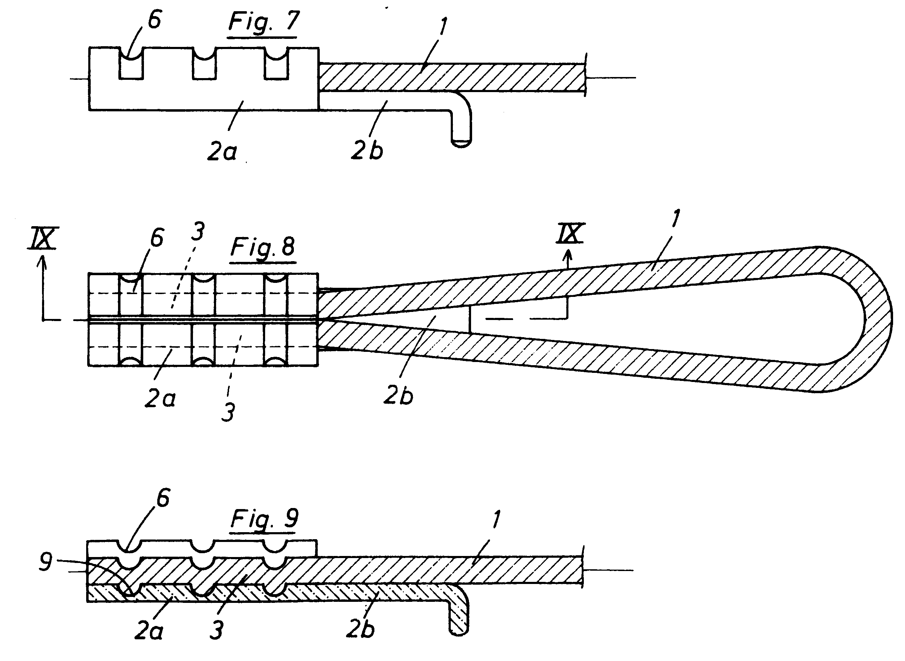

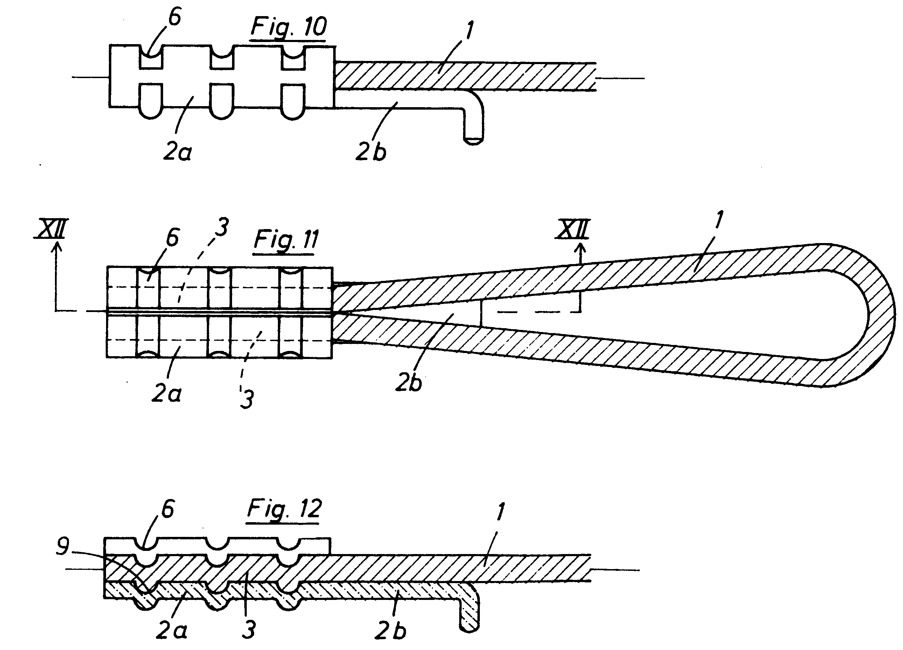

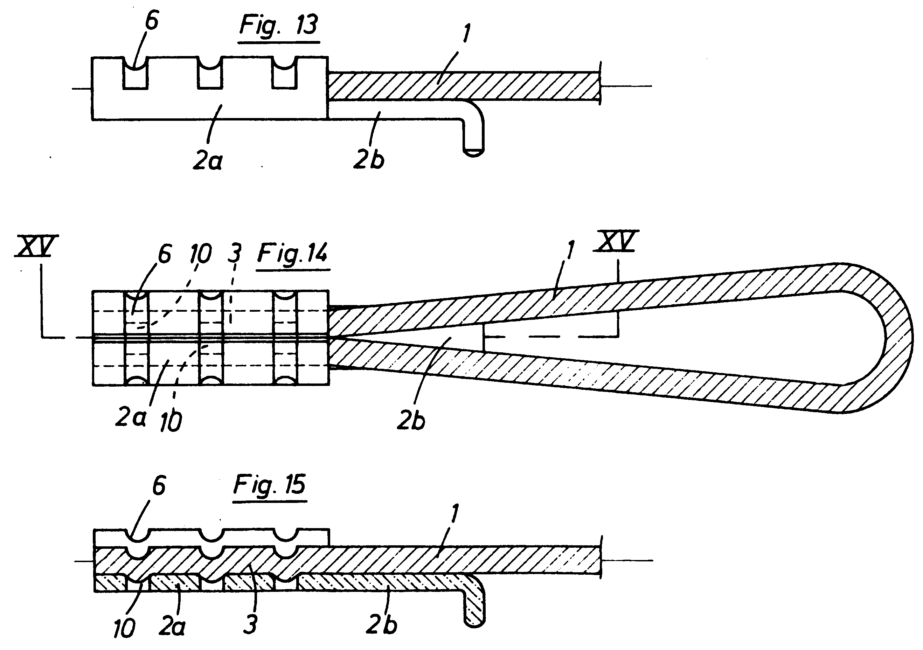

Bei den weiteren Ausführungsbeispielen gemäß den Fig. 7 bis 9, 10 bis 12 und 13 bis 15 sind die Einkerbungen 6 nur auf einer Seite angebracht. Zur Erhöhung des Ausziehwiderstandes des Drahtseiles 1 sind auf der Innenseite des hülsenförmigen Abschnitts 2a gegenüber den Einkerbungen 6 Ausnehmungen vorgesehen, in die die Drahtseilabschnitte 3 teilweise eindringen können. Die Ausnehmungen sind im Falle des Ausführungsbeispiels gemäß den Fig. 7 bis 9 ausgefräste Rillen 9 bzw. im Falle des Ausführungsbeispiels gemäß den Fig. 10 bis 12 geprägte Rillen 9. Ebensogut können die Ausnehmungen aber auch Löcher 10 sein, wie mit den Fig. 13 bis 15 beispielhaft dargestellt.

## Patentansprüche

1. Zugglied zur Anwendung im Automobilbau, nämlich in Verbindung mit der Halterung von Gurtschlössern, bestehend aus zwei parallelen Drahtseilabschnitten (3), insbesondere eines zu einer Schlaufe umgebogenen Drahtseiles (1), und einem daran angepreßten Mitnehmerteil (2), **dadurch gekennzeichnet**, daß das Mitnehmerteil (2) ein ursprünglich flaches und anschließend mindestens teilweise hülsenförmig umgebogenes Blechteil ist, wobei der hüisenförmige Abschnitt (2a) des Mitnehmerteils (2) quer zur Zugrichtung verlaufende Einkerbungen (6) aufweist, derart daß auf einer Seite des hülsenförmigen Abschnittes (2a) des Mitnehmerteils (2) mindestens eine Einkerbung (6) und auf der gegenüberliegenden Seite vor und hinter der Einwirkstelle der erstgenannten Einkerbung (6) jeweils eine weitere Einkerbung (6) vorgesehen sind.

2. Zugglied zur Anwendung im Automobilbau, nämlich in Verbindung mit der Halterung von Gurtschlössern, bestehend aus zwei parallelen Drahtseilabschnitten (3), insbesondere eines zu einer Schlaufe umgebogenen Drahtseiles (1), und einem daran angepreßten Mitnehmerteil (2), **dadurch gekennzeichnet**, daß das Mitnehmerteil (2) ein ursprünglich flaches und anschließend mindestens teilweise hülsenförmig umgebogenes Blechteil ist, wobei der hülsenförmige Abschnitt (2a) des Mitnehmerteils (2) quer zur Zugrichtung verlaufende Einkerbungen (6) aufweist und daß an der Innenseite des hülsenförmigen Abschnitts (2a) gegenüber den Einkerbungen (6) Ausnehmungen zum teilweisen Eindringen der Drahtseilabschnitte (3) vorgesehen sind.

3. Zugglied nach Anspruch 1 oder 2, **dadurch gekennzeichnet**, daß die Einkerbungen (6) senkrecht auf die parallelen Drahtseilabschnitte (3) gerichtet sind.

4. Zugglied nach einem der Ansprüche 1 bis 3, **dadurch gekennzeichnet**, daß eine Einkerbtiefe von mindestens 20 % der jeweils gewählten Blechstärke vorgesehen ist.

5. Zugglied nach einem der Ansprüche 1 bis 4, **dadurch gekennzeichnet**, daß sich die Einkerbungen (6) seitlich jeweils bis maximal zur Mittellinie der beaufschlagten Drahtseilabschnitte ( 3 ) erstrecken.

6. Zugglied nach einem der Ansprüche 1 bis 5, **dadurch gekennzeichnet**, daß die Einkerbungen (6) einen im wesentlichen rechteckigen Querschnitt mit leichter Rundung am Grund aufweisen.

7. Zugglied nach Anspruch 2, **dadurch gekennzeichnet**, daß die Ausnehmungen Rillen (9) sind.

8. Zugglied nach Anspruch 2, **dadurch gekennzeichnet**, daß die Ausnehmungen Löcher (10) sind.

## Claims

1. A tension member for use in automobile construction, namely in connection with the mounting of belt fastenings, consisting of two parallel wire cable sections (3), in particular of a wire cable (1) which is bent around into a loop, and a carrier part (2) pressed against it, characterised in that the carrier part (2) is a sheet metal part which was originally flat and was subsequently bent around at least partially in the form of a sleeve, in which the sleeve-shaped section (2a) of the carrier part (2) has indentations (6) running transversely to the direction of tension, such that on one side of the sleeve-shaped section (2a) of the carrier part (2) at least one indentation (6) is provided and on the opposite side a further indentation (6) is provided in each case in front of and behind the site of action of the first-named indentation (6).

2. A tension member for use in automobile construction, namely in connection with the mounting of belt fastenings, consisting of two parallel wire cable sections (3), in particular of a wire cable (1) which is bent around into a loop, and a carrier part (2) pressed against it, characterised in that the carrier part (2) is a sheet metal part which was originally flat and was subsequently bent around at least partially in the form of a sleeve, in which the sleeve-shaped section (2a) of the carrier part (2) has indentations (6) running transversely to the direction of tension and that on the inner side of the sleeve-shaped section (2a) opposite the indentations (6) recesses are provided for the partial penetration of the wire cable sections (3).

3. A tension member according to Claim 1 or 2, characterised in that the indentations (6) are directed vertically onto the parallel wire cable sections (3).

4. A tension member according to one of Claims 1 to 3, characterised in that a depth of indentation of at least 20 % of the respectively selected sheet metal thickness is provided.

5. A tension member according to one of Claims 1 to 4, characterised in that the indentations (6) extend laterally in each case at a maximum up to the centre line of the wire cable sections (3) which are acted upon.

6. A tension member according to one of Claims 1 to 5, characterised in that the indentations (6) have a substantially rectangular cross-section with a slight rounding at the bottom.

7. A tension member according to Claim 2, characterised in that the recesses are grooves (9).

8. A tension member according to Claim 2, characterised in that the recesses are holes (10.)

## Revendications

1. Organe de tension, pour utilisation dans la construction automobile, précisément en liaison avec le maintien de boucles de ceintures, constitué par deux parties de câble parallèles (3), en particulier d'un câble (1) qui est recourbé pour former une boucle, et par un organe d'entraînement (2) qui est comprimé sur elles, caractérisé par le fait que l'organe d'entraînement (2) est une pièce en tôle qui est initialement plate et que l'on plie ensuite en forme de manchon, du moins partiellement, la partie (2a) en forme de manchon de l'organe d'entraînement (2) présentant des entailles de sertissage (6) qui s'étendent transversalement par rapport à la direction de la tension, de manière qu'au moins une entaille de sertissage (6) soit prévue sur un côté de la partie (2a) en forme de manchon de l'organe d'entraînement (2) et que, sur le côté opposé, une autre entaille de sertissage (6) soit prévue à chaque fois devant et derrière le point d'action de la première entaille de sertissage (6) citée.

2. Organe de tension, pour utilisation dans la construction automobile, précisément en liaison avec le maintien de boucles de ceintures, constitué par deux parties de câble parallèles (3), en particulier d'un câble (1) qui est recourbé pour former une boucle, et par un organe d'entraînement (2) qui est comprimé sur elles, caractérisé en ce que l'organe d'entraînement (2) est une pièce en tôle qui est initialement plate et que l'on plie ensuite en forme de manchon, du moins partiellement, la partie (2a) en forme de manchon de l'organe d'entraînement (2) présentant des entailles de sertissage (6) qui s'étendent transversalement par rapport à la direction de la tension, et de manière que des évidements destinés à la pénétration partielle des parties de câble (3) soient prévus sur le côté intérieur de la partie (2a) en forme de manchon, en face des entailles de sertissage (6).

3. Organe de tension selon la revendication 1 ou 2, caractérisé par le fait que les entailles de sertissage (6) sont dirigées perpendiculairement aux parties de câble parallèles (3).

4. Organe de tension selon l'une des revendications 1 à 3, caractérisé par le fait qu'il est prévu une profondeur entaillée au moins égale à 20 % de l'épaisseur qui est choisie à chaque fois pour la tôle.

5. Organe de tension selon l'une des revendications 1 à 4, caractérisé en ce que, dans le sens latéral, les entailles de sertissage (6) s'étendent chacune au maximum jusqu'à la ligne centrale des parties de câble (3) sollicitées.

6. Organe de tension selon l'une des revendications 1 à 5, caractérisé par le fait que les entailles de sertissage (6) présentent une section transversale qui est rectangulaire pour l'essentiel et qui comporte un léger arrondi dans son fond.

7. Organe de tension selon la revendication 2, caractérisé en ce que les évidements sont des rainures (9).

8. Organe de tension selon la revendication 2, caractérisé en ce que les évidements sont des trous (10).
